(19) Europäisches Patentamt
European Patent Office
Office européen des brevets

(11) **EP 3 708 308 A1**

(12) **EUROPEAN PATENT APPLICATION**

(43) Date of publication:
**16.09.2020 Bulletin 2020/38**

(51) Int Cl.:
**B25J 9/16** $^{(2006.01)}$

(21) Application number: **20162216.4**

(22) Date of filing: **10.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.03.2019 US 201916297992**

(71) Applicant: **United Technologies Corporation Farmington, CT 06032 (US)**

(72) Inventors:
- WANG, Zhigang
South Windsor, CT Connecticut 06074 (US)
- KLECKA, Michael A.
Coventry, CT Connecticut 06238 (US)
- CHAKRABORTY, Abhijit
West Hartford, CT Connecticut 06117 (US)
- MENDOZA, Jeffrey Michael
Manchester, CT Connecticut 06040 (US)

(74) Representative: **Dehns**
**St. Bride's House**
**10 Salisbury Square**
**London EC4Y 8JD (GB)**

(54) **REAL-TIME IDENTIFICATION OF BURR SIZE AND LOCATION FOR ROBOTIC DEBURRING PROCESS**

(57)    A process of deburring a workpiece (14) comprising installing a workpiece (14) onto a machine table (16) proximate a robot (12), the workpiece (14) having a surface (24), the robot (12) having at least one force sensor (34) and a spindle load sensor (32) associated with a spindle coupled to a cutting tool (22), the robot (12) having at least one joint configured to be actuated by a joint actuator (26); the robot (12) being coupled to a controller (30); generating joint encoder signals (28) with the controller (30), the joint encoder signals (28) configured to direct the joint actuator (26); sensing contact forces between the cutting tool (22) of the robot (12) and the surface (24) of the workpiece (14); determining a deburring path of the cutting tool (22) to deburr the workpiece (14); and controlling the robotic deburring process by use of the joint encoder signals (28), a physics based model of burr size and material removal, a nominal trajectory (38) and an actual trajectory (40) of the cutting tool center point position (36).

Real-time deburring process

FIG. 1

EP 3 708 308 A1

## Description

BACKGROUND

The present disclosure is directed to the process of deburring, and more particularly use of a process to identify burr size and location for the purpose of deburring.

Burrs in machined workpieces are complex and troublesome, and additional deburring operations are required to clean the workpieces. The type of burr formed and its characteristics depend on many factors including, but not limited to, the machining process, tool properties, coolant properties, and workpiece material. In general, there are four basic types of burrs, the Poisson burr, roll-over burr, tear burr, and cut-off burr. Each type of burr requires a different deburring operation to effectively remove the burr. Traditional deburring operations are manual labor intensive posing significant health safety concerns. Deburring operations can comprise substantial coats, which could vary up to 30% for high precision components, such as aircraft engine components.

Robotic deburring applications replace traditional unsafe manual deburring systems. The automatic robotic deburring systems can provide monetary savings, if executed correctly.

Due to the random nature of burr formation during the manufacturing process, precisely predicting the size and location of the burr is challenging. The inconsistency of burr formation together with burr high interaction with the robot represents a challenge to the programming and controls applied to robotic deburring operations.

The commercial solutions offered to solve the problems related to deburring is to increase the compliance of the deburring system, such as using compliant tooling. However, this solution does not allow for an efficient control of the interaction between the tool and the workpiece. A lack of interaction control can result in misaligned and irregular surfaces.

Also the current robotic deburring process needs careful path planning, otherwise it may either become unstable, if large sized burrs exist on the generated path, or ineffective if the location of the burr is not properly identified within a robot's accuracy.

Therefore, a more robust solution with a better control capability is needed for the robotic deburring process.

SUMMARY

In accordance with the present disclosure, there is provided a process of deburring a workpiece comprising installing a workpiece onto a machine table proximate a robot, the workpiece having a surface, the robot having at least one force sensor and a spindle load sensor associated with a spindle coupled to a cutting tool, the robot having at least one joint configured to be actuated by a joint actuator; the robot being coupled to a controller; generating joint encoder signals with the controller, the joint encoder signals configured to direct the joint actuator; sensing contact forces between the cutting tool of the robot and the surface of the workpiece; determining a deburring path of the cutting tool to deburr the workpiece; and controlling the robotic deburring process by use of the joint encoder signals, a physics based model of burr size and material removal, a nominal trajectory of the cutting tool center point position, and an actual trajectory of the cutting tool center point position.

In another and alternative embodiment, the sensing contact forces comprises determining a spindle torque with the spindle load sensor.

In another and alternative embodiment, the sensing contact forces comprises determining at least one force signal with the force sensor.

In another and alternative embodiment, the process further comprises calculating the actual trajectory of the cutting tool center point position based on the joint encoder signals.

In another and alternative embodiment, the process further comprises determining a physics based model of burr size and material removal.

In another and alternative embodiment, the process further comprises determining the nominal trajectory of the cutting tool center point position.

In another and alternative embodiment, the process further comprises determining the actual trajectory of the cutting tool center point position.

In another and alternative embodiment, the process further comprises equating a deburring path to the nominal trajectory of the cutting tool center point position, wherein the deburring path is based on a computer aided design model of the workpiece.

In another and alternative embodiment, the process further comprises extracting the joint encoder signals from the controller.

In another and alternative embodiment, the process further comprises calculating the actual trajectory of the deburring path based on robot kinematics derived from the joint encoder signals.

In another and alternative embodiment, the process further comprises the controller maintaining a prescribed contact load of the cutting tool on the surface.

In another and alternative embodiment, the process further comprises the controller correcting the tool path and maintaining a predetermined contact load between the tool and the workpiece surface with a real-time force control.

In another and alternative embodiment, the process further comprises determining a burr size by calculating inputs from the spindle load sensor, wherein a spindle load is proportional to the material removal.

In another and alternative embodiment, the process further comprises utilizing the spindle load as a threshold value to identify a burr size.

In another and alternative embodiment, the process further comprises determining a location and a size of the burr.

In another and alternative embodiment, the process further comprises utilizing the location of the burr and the size of the burr to guide a path for removal of leftover large burrs.

In another and alternative embodiment, the process further comprises determining a position and an orientation of the cutting tool with respect to a base of the robot.

Accordingly, a more efficient monitoring system is necessary to transfer information about the material removal process to the robot controller. To achieve this goal, the deburring process can utilize different sensing techniques, such as force sensors, vision sensors, acoustic emission sensors and spindle power signals.

Each of the alternative sensing techniques has positive and negative aspects. Thus, a control strategy based on sensor fusion is considered as the complete solution to robotic deburring applications.

The deburring process can identify the size and location of burrs for robotic deburring using rigid carbide deburring tools.

Other details of the deburring process are set forth in the following detailed description and the accompanying drawings wherein like reference numerals depict like elements.

BRIEF DESCRIPTION OF THE DRAWINGS

FIG. 1 is a schematic representation of an exemplary deburring process chart.
Fig. 2 is a graph of an exemplary trajectory of the tool center point.
Fig. 3 is a schematic of exemplary burr formations.
Fig. 4 is a modified Denavit-Hartenberg notation.

DETAILED DESCRIPTION

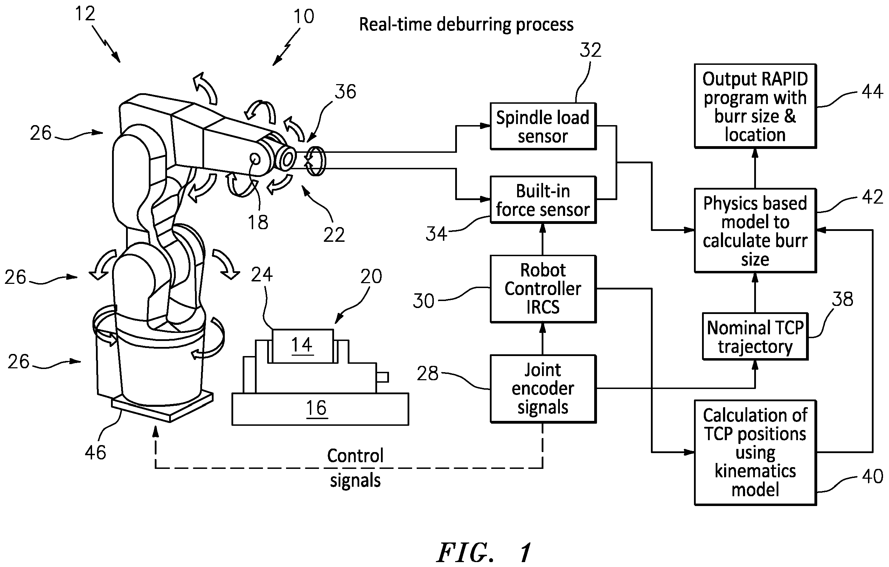

Referring now to the FIG. 1, there is illustrated a deburring process chart 10. The chart 10 includes process steps and a schematic diagram of an exemplary robot 12. The robot 12 can be configured to perform deburring on a workpiece 14 located on a machine table 16. The robot 12 can include force sensors 18. The force sensors 18 can provide the robot 12 the capability to improve position control accuracy between the robot 12 and workpiece 14 by sensing contact forces 20 between a cutting tool 22 of the robot 12 and a surface or edges 24 of the workpiece 14. The cutting tool 22 can include a rigid carbide deburring tool. The cutting tool 22 is required to maintain contact with sufficient force, or a contact load, in order to properly function for deburring the workpiece 14. The robot 12 is equipped with various force sensors 18, such as a spindle load sensor 32 and a force sensor 34. The spindle load sensor is configured to sense the torsional load on the spindle of the cutting tool 22. The force sensor is configured to sense the contact forces 20 based on the displacement of the cutting tool in an X-Y-Z direction. The robot 12 also includes joint actuators 26 that react to joint encoder signals 28 produced from the controller 30. The joint encoder signals 28 direct the joint actuators 26 into position, and ultimately locate a tool center point (TCP) 36 position of the cutting tool 22 relative to the workpiece 14 surface 24.

In deburring operations, the contact force between the tool and workpiece can be represented in the normal direction and tangential direction of the workpiece contour. Based on tool path, the robot motion can be globally determined in advance. At every position along the workpiece surface the tangential and normal directions are to be identified so that in the tangential direction a local movement can be specified and in the normal direction the contact force can be controlled.

To implement force control on a position-controlled robot controller the corrective position/force control approach is utilized. In the normal direction a motion correction is generated by controlling the contact force: $F_n = g_1(F_d - F_c)$, where $F_d$ and $F_c$ are the desired and actual contact force between the tool and workpiece, respectively, and $g_1(.)$ represents the force controller function. In the tangential direction the tool velocity is controlled, so a motion correction is given in the tangential direction by: $\delta t = \int g_2(v_d - v_c)dt$, where $v_d$ and $v_c$ are the desired and actual tool velocity, respectively and $g_2(.)$ represents the velocity controller.

Fig. 1 shows the flow chart of the process that can identify the burr size and location during the robotic deburring process. The robot 12 follows a path along the surface 24 of the workpiece 14 during deburring.

The process 10 includes path planning; that is determining the path the tool 22 will follow to deburr the workpiece 14. As part of path planning, the deburring path is generated based on a computer aided design (CAD) model of the workpiece 14. As part of the path planning, the nominal TCP trajectory 38 of the tool 22 TCP 36 can be determined by equating the deburring path based on the CAD model as the nominal trajectory 38 of the tool 22. In addition to the nominal trajectory 38 of the tool 22, an actual trajectory is also determined. All joint encoder signals 28 are extracted from the robot controller 30, which can then be used to calculate the actual trajectory of the deburring path based on robot kinematics at 40.

During the deburring process, to maintain the prescribed contact load, a real-time force control is able to correct the tool path and maintain an adequate contact load between the robot tool 22 and the workpiece 14 at the part surface 24.

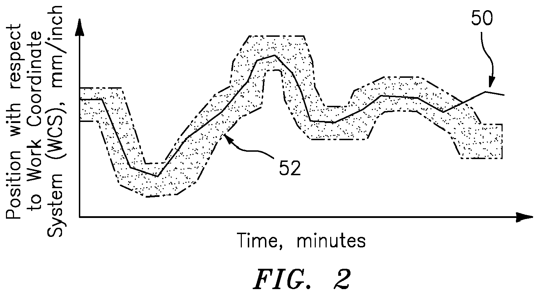

In operation, the deviation between the nominal TCP trajectory 38 and actual path trajectory 40 is caused by the deburring forces. As shown in Fig. 2, if the actual trajectory 50 of TCP is out of the nominal trajectory envelope 52, where a larger sized burr is more likely to cause this larger deviation. Accordingly based on the measured spindle load and machining condition, a physics based model is then used to estimate the burr size, its location along the tool path, and associated material removal. The units for the X and Y axes are minutes and mm/inch, respectively. The X axis represents Time and the Y axis represents Position with respect to Work Coordinate System (WCS), respectively.

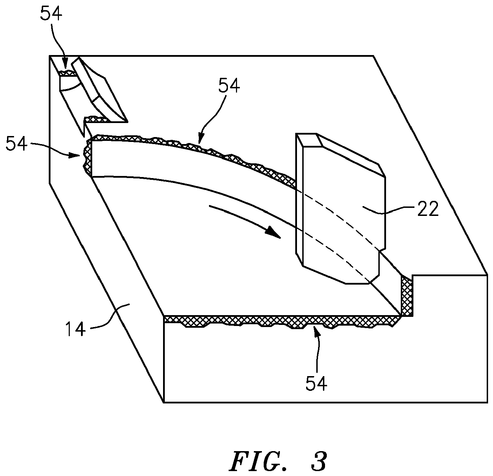

Fig. 3 is an illustration of potential burr formations, including deburring tool 22, workpiece 14, and burrs 54. Workpiece 14 can be any object that is being worked on by the robot 12. Burr 54 can be any type of burr, but burr 54 will likely be one of a Poisson burr, a roll-over burr, a tear burr, or a cut-off burr. FIG. 3 illustrates a few types of burr 54 formations on workpiece 14, including a Poisson burr, a roll-over burr, and a tear burr. A Poisson burr is a burr that is formed when the machined material bulges outwards when the machining tool is applied to the workpiece under a downward pressure. A roll-over burr is typically produced when a cutting tool exits a material and the sharp tip of the tool pushes the material rather than cutting through or chipping it, thus creating the burr. A tear burr is created when material is torn away from a workpiece, rather than being sheared; this usually occurs during a punching or drilling process. A cut-off burr (not shown in FIG. 3) is produced when a portion of material falls away from the main workpiece, tearing it and leaving behind a burr.

The burr size is determined at 42. The burr size can be calculated from inputs from the spindle load sensor 32. The spindle load is proportional to the material removal in the deburring process. Thus, the spindle load is used as a threshold value to identify large burr size. Together with the location information from joint encoders 28 and spindle loads 32, the location and size of burrs can be determined 44 after the first pass of the cutting tool 22. The location and size of the burrs are then used to guide the following clean-up path to remove leftover large burrs. If necessary, the process is repeated until no large burrs are identified.

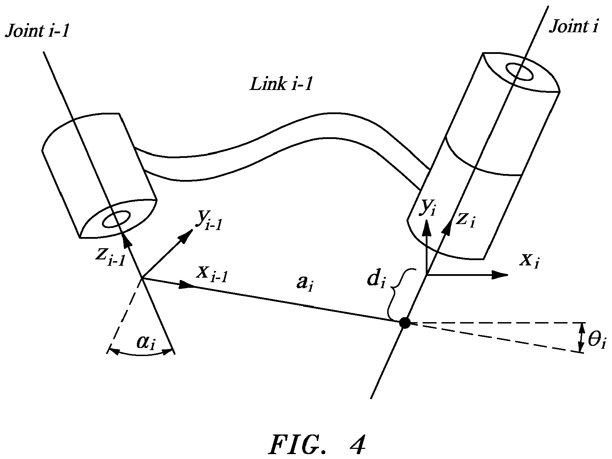

Referring to Fig. 4, it is possible to determine the position and orientation of the tool 22 with respect to a base 46 of the robot 12.

To mathematically model the robot 12 and hence determine the position and orientation of the cutting tool 22 with respect to the robot base 46, it is necessary to assign a global coordinate frame to the base 46 of the robot 12 and a local reference frame at each joint. Then, the Denavit-Hartenberg (DH) is presented to build the homogeneous transformations matrices between the robot joint axes. These matrices are a function of four parameters resulted from a series of translations and rotations around different axes. The illustration of how frame {i} is related to the previous frame {i-1} and the description of the frame parameters are shown in Fig. 4.

Based on Fig. 4, the notation of modified DH (MDH) is described as following, where $i$ is the number of joints, $\alpha_i$ is the angle between $z_{i-1}$ and $z_i$ about $x_{i-1}$, $a_i$ is the distance between $z_{i-1}$ and $z_i$ along $x_{i-1}$, $\theta_i$ is the angle between $x_{i-1}$ and $x_i$ about $z_i$, and $d_i$ is the distance between $x_{i-1}$ and $x_i$ along $z_i$.

Thus, the four transformations between the two axes can be defined as:

$$^{i-1}_{i}T = Rot(X_{i-1}, \alpha_{i-1}) \cdot Trans(X_{i-1}, \alpha_{i-1}) \cdot Rot(Z_i, \theta_i) \cdot Trans(0,0,d_i)$$

After finishing the multiplication of these four transformation, the homogeneous transformation can be obtained as:

$$^{i-1}_{i}T = \begin{bmatrix} \cos(\theta_i) & -\sin(\theta_i) & 0 & a_{i-1} \\ \sin(\theta_i)\cos(\alpha_{i-1}) & \cos(\theta_i)\cos(\alpha_{i-1}) & -\sin(\alpha_{i-1}) & -d_i\sin(\alpha_{i-1}) \\ \sin(\theta_i)\sin(\alpha_{i-1}) & \cos(\theta_i)\sin(\alpha_{i-1}) & \cos(\alpha_{i-1}) & d_i\cos(\alpha_{i-1}) \\ 0 & 0 & 0 & 1 \end{bmatrix}$$

A technical advantage of the deburring process that uses the force sensors 18 allows for force sensing to adapt to part variations.

The force control during machining can be utilized to enhance productivity and quality. The disclosed process can minimize tool wear and tool breakage can be avoided.

By combining the joint encoder signals, spindle torque and force signals, it is more effective to control the robotic deburring process.

A technical advantage of the deburring process can enable reliable removal rates by the real-time monitoring and control of the deburring process. This translates to lower cost, higher productivity or fewer robots with less capital investment.

Another technical advantage of the deburring process can include that with the identified location and size of a large burr, the burrs can be removed completely, so no further cleaning path is needed.

Another technical advantage includes that both tool life and machined surface can be improved by maintaining stable machining forces in the process.

Another technical advantage of the disclosed deburring process is that the deburring process can be saved as a reference either for future process optimization or a part of product lifetime data, which enables the complete digital thread manufacturing.

There has been provided a deburring process. While the deburring process has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A process of deburring a workpiece (14) comprising:

   installing a workpiece (14) onto a machine table (16) proximate a robot (12), said workpiece (14) having a surface (24), said robot (12) having at least one force sensor (34) and a spindle load sensor (32) associated with a spindle coupled to a cutting tool (22), said robot (12) having at least one joint configured to be actuated by a joint actuator (26); said robot (12) being coupled to a controller (30) ;
   generating joint encoder signals (28) with said controller (30), said joint encoder signals (28) configured to direct the joint actuator (26);
   sensing contact forces between the cutting tool (22) of the robot (12) and the surface (24) of the workpiece (14);
   determining a deburring path of the cutting tool (22) to deburr the workpiece (14); and
   controlling the robotic deburring process by use of said joint encoder signals (28), a physics based model of burr size and material removal, a nominal trajectory (38) of said cutting tool center point position (36), and an actual trajectory (40) of said cutting tool center point position (36) .

2. The process according to claim 1, wherein sensing contact forces comprises determining:

   a spindle torque with said spindle load sensor (32); and/or
   at least one force signal with said force sensor (34).

3. The process according to claim 1 or 2, further comprising:
   calculating said actual trajectory (40) of said cutting tool center point position (36) based on said joint encoder signals (28).

4. The process according to claim 1, 2 or 3, further comprising:
   determining a or the physics based model of burr size and material removal.

5. The process according to any preceding claim, further comprising:
   determining the nominal trajectory (38) of said cutting tool center point position (36).

6. The process according to any preceding claim, further comprising:
   determining the actual trajectory (40) of said cutting tool center point position (36).

7. The process according to any preceding claim, further comprising:
   equating a deburring path to said nominal trajectory (38)of said cutting tool center point position (36), wherein said deburring path is based on a computer aided design model of the workpiece (14).

8. The process according to any preceding claim, further comprising:

extracting said joint encoder signals (28) from said controller (30); and, optionally,
calculating said actual trajectory (40) of the deburring path based on robot kinematics derived from the joint encoder signals (28).

9. The process according to any preceding claim, further comprising:
said controller (30) maintaining a prescribed contact load of the cutting tool (22) on the surface (24).

10. The process according to any preceding claim, further comprising:
said controller (30) correcting said tool path and maintaining a predetermined contact load between said tool (22) and said workpiece surface (24) with a real-time force control.

11. The process according to any preceding claim, further comprising:
determining a burr size (42) by calculating inputs from the spindle load sensor (32), wherein a spindle load is proportional to the material removal.

12. The process according to claim 11, further comprising:
utilizing said spindle load as a threshold value to identify a or the burr size.

13. The process according to any preceding claim, further comprising:
determining a location and a size of said burr (44).

14. The process according to claim 13, further comprising:
utilizing said location of said burr and said size of said burr to guide a path for removal of leftover large burrs.

15. The process according to any preceding claim, further comprising:
determining a position and an orientation of said cutting tool (22) with respect to a base (46) of said robot (12) .

*FIG. 1*

FIG. 2

FIG. 3

*FIG. 4*

Europäisches
Patentamt

European
Patent Office

Office européen
des brevets

# EUROPEAN SEARCH REPORT

Application Number

EP 20 16 2216

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU M-H ET AL: "APPLICATIONS OF THE FUZZY LOGIC IN AUTOMATED ROBOTIC DEBURRING", FUZZY SETS AND SYSTEMS, ELSEVIER, AMSTERDAM, NL, vol. 63, no. 3, 10 May 1994 (1994-05-10), pages 293-305, XP000446522, ISSN: 0165-0114, DOI: 10.1016/0165-0114(94)90216-X * page 293 - page 296, left-hand column * * page 298 - page 300 * * page 302, left-hand column, last paragraph - page 303 *<br>----- | 1-15 | INV. B25J9/16 |
| X | LIU M-H ED - INSTITUTE OF ELECTRICAL AND ELECTRONICS ENGINEERS: "Robotic Deburring Based On Fuzzy Force Control", PROCEEDINGS OF THE IEEE/RSJ INTERNATIONAL CONFERENCE ON INTELLIGENT ROBOTS AND SYSTEMS. RALEIGH, NC., JULY 7 - 10, 1992; [PROCEEDINGS OF THE IEEE/RSJ INTERNATIONAL CONFERENCE ON INTELLIGENT ROBOTS AND SYSTEMS], NEW YORK, IEEE, US, vol. 2, 7 July 1992 (1992-07-07), pages 782-789, XP010223116, ISBN: 978-0-7803-0738-4 * Section IV, first paragraph; page 782 - page 786 *<br>----- | 1-15 | TECHNICAL FIELDS SEARCHED (IPC)<br><br>B25J<br>G05B |

The present search report has been drawn up for all claims

| Place of search | Date of completion of the search | Examiner |
|---|---|---|
| The Hague | 27 July 2020 | Prokopiou, Platon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)